Europäisches Patentamt

European Patent Office

Office européen des brevets

(19)

(11)  **EP 1 662 121 A1**

(12)  **DEMANDE DE BREVET EUROPEEN**

(43) Date de publication:
   **31.05.2006 Bulletin 2006/22**

(51) Int Cl.:
   ***F02D 41/00*** *(2006.01)*

(21) Numéro de dépôt: **05292349.7**

(22) Date de dépôt: **07.11.2005**

(84) Etats contractants désignés:
   **AT BE BG CH CY CZ DE DK EE ES FI FR GB GR
   HU IE IS IT LI LT LU LV MC NL PL PT RO SE SI
   SK TR**
   Etats d'extension désignés:
   **AL BA HR MK YU**

(30) Priorité: **30.11.2004 FR 0412687**

(71) Demandeur: **PEUGEOT CITROËN AUTOMOBILES
   S.A.
   78140 Velizy Villacoublay (FR)**

(72) Inventeur: **Souidi, Fayçal
   92130 Issy-les-Moulineaux (FR)**

(74) Mandataire: **Thinat, Michel
   Cabinet Weinstein
   56 A, rue du Faubourg Saint-Honoré
   75008 Paris (FR)**

(54)   **Procédé de régulation d'un système d'admission d'un moteur à combustion interne et
   véhicule automobile pour la mise en oeuvre du procédé**

(57)   L'invention concerne un procédé de régulation d'un système d'admission d'un moteur à combustion interne et un véhicule automobile équipé de moyens permettant la mise en oeuvre de ce procédé.

Selon ce procédé, on mesure au moins une valeur de pression dans au moins une chambre de combustion du moteur et calcule la ou les variations de pression par rapport à une pression de référence, on estime la masse totale de gaz admise dans l'ensemble des chambres de combustion du moteur à partir de la (ou des) variation(s) de pression calculée(s) et sur la base d'une série de valeurs de débit de gaz préalablement prédéterminée, et on introduit la masse totale de gaz estimée et le débit de gaz d'échappement recirculés estimé comme valeurs d'entrée dans un régulateur destiné à réguler le système d'admission du moteur.

Fig. 2

**Description**

L'invention concerne un procédé de régulation d'un système d'admission d'un moteur à combustion interne ainsi qu'un véhicule automobile comprenant un moteur à combustion interne avec des moyens de stockage de données et de calculs conformés pour mettre en oeuvre le procédé de régulation.

L'invention trouve une application particulière dans un système de commande d'un moteur à allumage par compression et notamment dans la commande de ce qui est appelé généralement "la boucle d'air" d'un moteur à allumage par compression et avec injection directe à partir d'un dispositif d'injection appelé "Common Rail" ou des injecteurs pompes, où l'injection directe est commandée sur la base de signaux reçus de capteurs de pression disposés dans une ou plusieurs chambres de combustion du moteur. Toutefois, l'invention peut également s'appliquer à des moteurs à allumage commandé.

Pour obtenir un fonctionnement optimal d'un moteur à combustion interne, on se sert de plusieurs paramètres, par exemple de la masse d'air admise dans la ou les chambres de combustion du moteur. En effet, la masse d'air admise, par cycle de fonctionnement, dans chacune des chambres de combustion, conditionne les émissions et le couple fourni par le moteur.

Par ailleurs, dans de nombreux moteurs, on ajoute à l'air frais un pourcentage des gaz d'échappement du moteur qui sont reconduits ou recirculés vers l'entrée de la ou des chambres de combustion pour limiter les émissions de gaz toxiques. Toutefois, les demandes en air frais et les demandes en gaz recirculés variant au cours du fonctionnement du moteur notamment suivant le régime et la charge du moteur, il est donc nécessaire de connaître à tout moment la masse d'air frais aspirée par le moteur ainsi que le ratio masse de gaz recirculé sur masse d'air frais afin de pouvoir réguler le dispositif d'admission d'air et de gaz recirculés.

Toutefois, la masse de gaz admis n'étant pas une grandeur facile à mesurer dans l'environnement d'un moteur installé dans un véhicule (par opposition à l'environnement d'un moteur installé sur un banc de test), on utilise généralement une cartographie de remplissage associée éventuellement à un capteur de pression de suralimentation en cas de présence d'un turbocompresseur ou d'un compresseur.

Dans le cadre de la présente invention, le terme "les gaz admis" désigne indifféremment de l'air frais seul et de l'air frais mélangé avec une partie recirculée des gaz d'échappement, quel que soit leur rapport volumique, destinés à être admis dans une ou plusieurs chambres de combustion d'un moteur à combustion interne.

Cette désignation va par ailleurs dans le sens de l'objet de la présente invention selon lequel on régule le système d'admission de gaz sur la base d'une estimation de la masse totale des gaz admis dans la ou les chambres de combustion d'un moteur à combustion interne, faute de pouvoir mesurer directement la masse de gaz recirculés.

Des procédés d'estimation de la masse d'air admise dans une chambre de combustion d'un moteur à combustion interne sont connus. Ainsi, par exemple, le document FR-A-2 835 281 décrit un procédé d'estimation de la masse d'air admise dans une chambre de combustion à partir de mesures de la pression dans les cylindres du moteur. L'estimation se base sur un modèle polytropique et la masse d'air est estimée par une formule du type $M = A \times \Delta P + B$, où les coefficients A et B sont cartographiés en fonction du régime du moteur. Le coefficient A est par ailleurs corrigé en fonction de la température de l'air d'admission. Ce procédé d'estimation s'applique uniquement à des moteurs qui ne sont pas pourvus d'un système de recirculation des gaz d'échappement.

Un autre procédé d'estimation de la masse totale d'air admise est connu du document EP-A-0 522 908. Ce procédé se base, comme celui décrit dans le document cité ci avant, sur un modèle polytropique et sur une formule du type $M = A \times \Delta P + B$, où A et B sont fonction des positions angulaires du vilebrequin du moteur ainsi que de la pression dans les chambres de combustion, du volume dans les chambres de combustion aux positions angulaires indiquées du vilebrequin et d'autres paramètres. Ce procédé d'estimation s'applique uniquement à des moteurs à allumage commandé et sans recirculation des gaz d'échappement.

Le document US-A-005245969 décrit un procédé de contrôle des paramètres d'injection et d'avance à l'allumage dans un moteur à combustion interne à partir de l'évaluation du remplissage sur la base du signal d'un capteur de pression de la chambre de combustion. Ce procédé fait abstraction d'un débitmètre d'air et ne semble donc pas applicable à un moteur suralimenté et muni d'un dispositif de recirculation des gaz d'échappement.

Le document US-A-006167755 décrit un procédé d'estimation de la charge en air admise dans un moteur à combustion interne. L'estimation est effectuée à partir de la mesure de pression dans une chambre de combustion à deux positions angulaires prédéterminées du vilebrequin. Ce procédé semble inadapté au fonctionnement d'un moteur suralimenté et muni d'un dispositif de recirculation des gaz d'échappement.

Encore un autre procédé d'estimation de la masse d'air admise est connu du document US-A-005359975. La masse d'air est estimée sur la base des indications d'un débitmètre et se limite à des applications à un moteur à allumage commandé non suralimenté.

Tous les procédés d'estimation de la masse d'air frais admise dans une chambre de combustion ou de régulation du système d'admission énoncés ci avant se basent donc en particulier sur l'information issue d'un débitmètre d'air et sur une mesure de la pression dans le (ou les) cylindre(s). Toutefois, ces procédés connus présentent quelques inconvénients en raison desquels ils ne peuvent être appliqués de manière principale à un moteur à allumage par compression suralimenté et muni d'un dispositif de recirculation des gaz d'échappement.

En effet, lorsque la masse de gaz totale admise est estimée à l'aide de la pression mesurée dans le collecteur d'admission du moteur à combustion, la masse de gaz réellement admise dans la ou les chambres de combustion peut varier par rapport à cette valeur estimée en fonction des pertes de charge entre le collecteur d'admission et la ou les chambres de combustion. De plus, ces pertes de charge peuvent varier d'un exemplaire d'un type de moteur à l'autre en raison des tolérances de fabrication, et elles peuvent également varier au cours de la vie du moteur en raison de l'encrassement de la ou des chambres de combustion et de la variation du rendement volumétrique qui en résulte.

D'autres raisons pour lesquelles les procédés connus de régulation du système d'admission dans une chambre de combustion énoncés plus haut présentent quelques inconvénients en raison desquels ils ne peuvent être appliqués de manière principale à un moteur à allumage par compression suralimenté et muni d'un dispositif de recirculation des gaz d'échappement, sont, par exemple, des erreurs liées à l'hypothèse d'un déficit d'air, une gestion imprécise du taux de gaz d'échappement recirculés en fonctionnement transitoire du moteur et une dérive des données fournies par le débitmètre.

Des erreurs liées à l'hypothèse du déficit d'air peuvent survenir du fait que, selon cette hypothèse, pour un point de fonctionnement donné du moteur, déterminé par un régime et une quantité de carburant injectée, le débit total des gaz aspirés par le moteur est théoriquement constant, quel que soit le moteur utilisé et son kilométrage. Par conséquent, un contrôle en boucle fermée du débit d'air sur ce point de fonctionnement devrait garantir le taux de gaz d'échappement recirculés. En réalité, cependant, le débit global dépend de divers paramètres dont le rendement volumétrique du moteur et la température des gaz admis.

La gestion du taux de gaz d'échappement recirculés est presque systématiquement imprécise en fonctionnement transitoire du moteur. En effet, le débitmètre d'air étant placé très en amont du moteur, l'information qu'il délivre est en avance sur ce que le moteur aspire réellement. Ce décalage est dû au temps de transport d'une masse d'air considérée entre l'entrée du système d'alimentation et la chambre de combustion. Il s'y ajoute des effets de compression de l'air à travers le système d'admission complet.

En ce qui concerne des dérives des données fournies par le débitmètre, il faut tenir compte non seulement de l'encrassement de la ou des chambres de combustion et de la variation du rendement volumétrique qui en résulte, mais également de l'encrassement des éléments de mesure du débitmètre.

Au vu de ces difficultés et inconvénients rencontrées avec les débitmètres utilisés pour le contrôle de la boucle d'air des moteurs à allumage par compression, suralimentés et avec recirculation des gaz d'échappement, il parait souhaitable de trouver des moyens de mesure plus précis et plus fiables.

Le but de l'invention est donc de s'affranchir, le plus possible, d'un débitmètre d'air frais.

En même temps, il est souhaitable de trouver une solution qui permette de fournir à un dispositif de régulation d'un système d'admission d'un moteur à combustion interne, suralimenté et avec recirculation des gaz d'échappement, outre une information fiable sur le débit d'air frais aspiré par les chambres de combustion du moteur, une information sur le taux de gaz d'échappement recirculés.

Le but de l'invention est atteint avec un procédé de régulation d'un système d'admission d'un moteur à combustion interne qui comprend au moins les étapes suivantes :

mesurer au moins une valeur de pression dans au moins une chambre de combustion du moteur et calculer la ou les variations de pression par rapport à une pression de référence,
estimer la masse totale de gaz admise dans l'ensemble des chambres de combustion du moteur à partir de la (ou des) variation(s) de pression calculée(s) et sur la base d'une série de valeurs de débit de gaz préalablement prédéterminée, notamment prédéterminée en phase de développement du moteur, en fonction d'une variation de pression dans la chambre de combustion,
mesurer la pression de suralimentation,
estimer la pression et la température des gaz d'échappement recirculés en sortie de moteur,
estimer le débit de gaz d'échappement recirculés à l'aide de la pression de suralimentation mesurée et de l'estimation de la pression et de la température des gaz en sortie de moteur, et
introduire la masse totale de gaz estimée et le débit de gaz d'échappement recirculés comme valeurs d'entrée dans un régulateur destiné à réguler le système d'admission.

Ce procédé peut être complété par l'une au moins des étapes suivantes :

estimer la température des gaz admis dans les chambres de combustion du moteur à partir d'un modèle d'échanges thermiques, et corriger la masse totale de gaz admise en fonction des variations de la température des gaz admis ;
obtenir la masse totale de gaz admise dans l'ensemble des chambres de combustion du moteur à partir des estimations individuelles de la masse totale de gaz admise dans chacune des chambres de combustion du moteur ;

obtenir la masse totale de gaz admise dans l'ensemble des chambres de combustion du moteur à partir d'une estimation de la masse totale de gaz admise dans une seule chambre de combustion du moteur.

Selon un mode de mise en oeuvre du procédé de régulation de l'invention, il est concevable d'introduire la température de l'ensemble gaz et air frais comme valeur d'entrée dans un régulateur destiné à réguler le système d'admission.

Le but de l'invention est également atteint avec un véhicule automobile comprenant un moteur à combustion interne pourvu d'un collecteur de gaz d'admission, de soupapes d'admission destinées à permettre le passage des gaz d'admission vers des chambres de combustion du moteur, de pistons destinés à varier la pression des gaz dans les chambres de combustion du moteur, ainsi que de moyens de mesure de la pression des gaz dans au moins une chambre de combustion du moteur, de moyens de stockage, et de calcul d'une valeur de débit de gaz admis dans une chambre de combustion en fonction d'une variation de pression dans la ou les chambres de combustion, et de moyens de stockage et de calcul reliés aux moyens de mesure de la pression de gaz, les moyens de stockage et de calcul étant conformés pour mettre en oeuvre le procédé de régulation énoncé ci avant.

Le véhicule peut également comprendre des moyens pour mesurer la position angulaire d'un vilebrequin auquel les pistons sont reliés. Les moyens de stockage et de calcul sont alors également reliés aux moyens de mesure de la position angulaire du vilebrequin.

Dans ce véhicule, les moyens de stockage d'une série de valeurs de débit de gaz admis dans une chambre de combustion en fonction d'une variation de pression dans la chambre de combustion peuvent comprendre également des moyens de modélisation de valeurs de débit de gaz admis.

Les dispositions de l'invention permettent d'obtenir une commande plus précise et plus fiable de la boucle d'air des moteurs à allumage par compression. Elles permettent également de renoncer à l'utilisation d'un débitmètre d'air. En effet, la commande de la boucle d'air telle que la présente invention la propose, s'appuie sur deux paramètres, à savoir sur le débit total des gaz aspirés par les chambres de combustion du moteur et sur le débit des gaz d'échappement recirculés. Le débit total des gaz aspirés est estimé à partir des variations de pression mesurées à l'aide d'au moins un capteur de pression disposé dans au moins une des chambres de combustion du moteur. Et le débit des gaz d'échappement recirculés est calculé à partir d'une relation selon Barré de Saint Venant, appliquée au circuit des gaz d'échappement recirculés.

Ce type de commande est particulièrement avantageux du fait que l'on peut introduire, comme valeur d'entrée, à un calculateur de commande du moteur, d'une part un taux de gaz d'échappement recirculés fiable et précis aussi bien dans les phases stabilisées de fonctionnement que dans les phases transitoires de fonctionnement du moteur puisque ce taux est calculé ou estimé à partir du débit total des gaz aspirés par les chambre de combustion du moteur, et d'autre part, un signal correspondant au débit d'air au plus prêt possible de l'entrée des chambres de combustion, ce qui permet d'optimiser entre autre la gestion des phases transitoires de fonctionnement et limiter ainsi les émissions de fumée avec les gaz d'échappement.

La présente invention apporte donc l'avantage d'un procédé de régulation directement utilisable sur un moteur en cours de fonctionnement, ce qui permet par exemple de conformer un calculateur au dispositif de régulation d'un moteur à allumage par compression de façon à mettre en oeuvre ce procédé.

L'estimation du débit total des gaz admis dans des chambres de combustion d'un moteur à combustion interne, que ces gaz soient uniquement de l'air frais ou un mélange d'air frais avec un pourcentage de gaz d'échappement recirculés, s'appuie sur une estimation basée sur des paramètres du fonctionnement du moteur, qui sont déterminés, c'est-à-dire qui sont mesurés, cartographiés ou modélisés, lors du développement du moteur.

Conformément à l'invention, la valeur estimée du débit total des gaz admis dans le moteur est utilisée dans le contrôle du fonctionnement du moteur. Plus particulièrement, la valeur estimée est utilisée pour la régulation du système d'admission.

L'estimation du débit total des gaz admis dans les chambres de combustion du moteur nécessite la présence d'au moins un capteur de pression dans au moins une des chambres de combustion du moteur à combustion interne. Cette estimation nécessite par ailleurs la présence de moyens permettant de mesurer la position angulaire d'un vilebrequin auquel des pistons des chambres de combustion sont attachés. En effet, afin de pouvoir effectuer l'estimation du débit de gaz total avec la plus grande précision possible, on mesure la pression dans une chambre de combustion donnée à n positions angulaires différentes du vilebrequin, ce qui correspond à n positions différentes du piston dans la chambre de combustion et par là, à n volumes différents de la chambre de combustion donnée. On s'appuie, à cet effet, sur une relation linéaire liant le débit total des gaz et la somme de n variations de pression dans une chambre de combustion donnée, mesurés entre une position angulaire de référence et n positions angulaires considérées dans les phases d'admission et/ou compression de la chambre de combustion. n est bien entendu supérieur ou égal à 1.

D'autres caractéristiques et avantages de la présente invention ressortiront de la description ci-après d'un exemple de mise en oeuvre du procédé de régulation d'un système d'admission d'un moteur à combustion interne selon l'invention.

Cette description est faite en référence aux dessins dans lesquels :

- la figure 1 représente un profil de pression dans une chambre de combustion d'un moteur à combustion interne et

- la figure 2 représente un moteur à combustion interne avec quatre chambres de combustion et un dispositif de régulation d'un système d'admission d'un tel moteur.

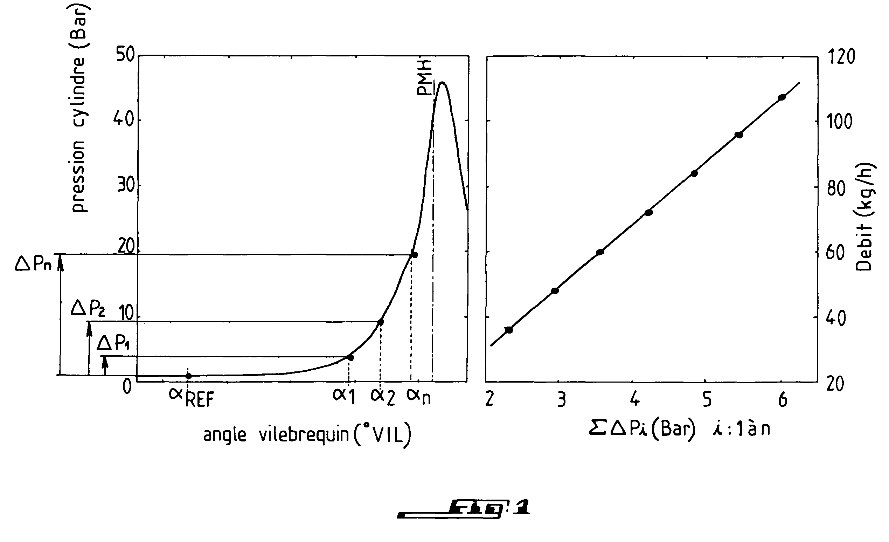

La figure 1 illustre, sous la forme de deux graphes, un profil de pression dans une chambre de combustion donnée, mesuré pendant la phase de compression (graphe de gauche) et la relation linéaire liant le débit total du gaz et la somme des variations de pression dans la chambre de combustion considérée suivant les positions angulaires du vilebrequin. Les différentes positions angulaires sont référencées $\alpha_i$, i variant de 1 à n, et la position de référence est référencée $\alpha_{ref}$.

En prenant en compte l'équation des gaz parfaits et l'hypothèse de compression isentropique, on peut démontrer dans l'équation

$$Q_{gaz} = A \times \sum_{i=1}^{n} \Delta Pi + B \quad ,$$

qui permet de calculer le débit de gaz et dans laquelle

$\Delta Pi = Pcyl_i - Pcyl_{ref}$ , avec $Pcyl_i$ et $Pcyl_{ref}$ comme pressions du cylindre considérées respectivement à l'angle $\alpha_i$ et à l'angle $\alpha_{ref}$ ;
A : pente de régression et
B : ordonnée à l'origine
que le coefficient A est calculé suivant l'équation

$$A = \frac{V\alpha_{ref}}{R \times T\alpha_{ref}} \times \left( \frac{1}{1/\rho_1^{\gamma} + 1/\rho_2^{\gamma} + ... + 1/\rho_n^{\gamma} - n} \right)$$

avec $\rho_1 = V\alpha_1 / V\alpha_{ref} , ....., \rho_n = V\alpha_n / V\alpha_{ref}$ et
$\gamma$ : coefficient polytropique
$V_{\alpha ref}$ : volume de chambre de combustion à la position angulaire $\alpha_{ref}$
$T\alpha_{ref}$ : température des gaz admis dans la chambre de combustion à la position angulaire $\alpha_{ref}$ du vilebrequin et
B = Masse de résiduels.

La difficulté de déterminer la pente de régression, c'est-à-dire le coefficient A, réside dans le fait que ce coefficient dépend de la température des gaz admis dans la chambre de combustion. Et, comme indiqué plus haut, la température des gaz admis dépend fortement des variations du taux (ou pourcentage) de gaz d'échappement recirculés.

Avantageusement, le coefficient A est calculé selon la relation $A = A_0/T_{coll}$, où $A_0$ est une constante calibrée en fonction des résultats obtenus par des essais spécifiques pour chaque configuration d'un moteur à combustion interne et où $T_{coll}$ est la température dans le collecteur d'admission après le mélange fait de l'air frais et de gaz d'échappement recirculés. La température dans le collecteur d'admission peut être mesurée par un capteur spécifique. Mais elle peut également être estimée sur la base d'une cartographie de température d'échappement moteur à partir des autres paramètres de fonctionnement du moteur et d'un modèle d'échange thermique dans un refroidisseur dans lequel les gaz d'échappement recirculés passent. La décision pour l'une ou l'autre des façons de déterminer la température du collecteur d'admission, c'est-à-dire la décision pour l'utilisation d'une température de collecteur d'admission mesurée ou pour l'utilisation d'une température de collecteur d'admission estimée, est prise en fonction du type de moteur, de l'ensemble des instruments et capteurs susceptibles d'être mis en oeuvre et le risque d'une dérive ou d'une dispersion des différents capteurs et des caractéristiques des composants du système d'admission.

Ainsi, la masse totale de gaz admise dans des chambres de combustion d'un moteur à combustion interne est estimée en prédéterminant, essentiellement lors de la mise au point d'un type de moteur pendant son développement, d'abord une série de valeurs de débit de gaz admis dans une chambre de combustion en fonction d'une variation de pression dans la chambre de combustion, en mesurant une ou plusieurs valeurs de pression dans une ou plusieurs chambres de combustion du moteur et en calculant ensuite la ou les variations de pression par rapport à une pression de référence, et en estimant ensuite la masse totale de gaz admise dans l'ensemble des chambres de combustion du moteur à partir de la ou des variations de pression calculées et sur la base de la série de valeurs de débit de gaz prédéterminée.

L'information sur le débit de gaz d'échappement recirculés est obtenue par une estimation effectuée à partir d'une formulation de type Barré de Saint Venant appliquée au flux de gaz d'échappement recirculé en considérant ce flux d'un fluide compressible comme un écoulement isentropique monodimensionnel.

Le débit des gaz d'échappement recirculés est donc calculé à partir de la formulation

$$Q_{egr} = \mu \, A \, P_1 \sqrt{\frac{2}{R \, T_1}} \sqrt{\frac{\kappa}{\kappa-1}\left[\left(\frac{P2}{P1}\right)^{2/\kappa} - \left(\frac{P2}{P1}\right)^{\kappa+1/\kappa}\right]}$$

si P2/P1 >≈ 0.56

$$Q_{egr} = \mu \, A \, P_1 \frac{1}{\sqrt{R \, T_1}} \sqrt{\kappa \times \left(\frac{2\times\kappa}{\kappa+1}\right)^{\kappa+1/\kappa-1}}$$

si P2/P1 <≈ 0.56

où $\mu$ x A représente un coefficient de décharge de la vanne régulant le flux des gaz d'échappement recirculés, multiplié par la section géométrique du conduit par lesquels les gaz d'échappement recirculés sont amenés,

$P_1$ représente la pression en amont de la vanne régulant le flux des gaz d'échappement recirculés, cette pression correspondant à la pression dans le collecteur d'échappement des moteurs. Bien que l'on puisse mesurer cette pression, il est généralement préférable d'utiliser un modèle basé soit sur des cartographies soit sur un signal modélisé à l'aide de la pression dans une chambre de combustion ;

$P_2$ représente la pression en aval de la vanne régulant le flux des gaz d'échappement recirculés, cette pression étant considérée comme égale à la pression dans le collecteur d'admission. Cette pression est souvent dénommée "pression de suralimentation". Cette pression est mesurée moyennant un capteur prévu à cet effet.

T1 représente la température des gaz en amont de la vanne régulant le flux des gaz d'échappement recirculés, cette température correspondant à la température des gaz dans le collecteur d'échappement. Bien que l'on puisse mesurer cette température, on préfère généralement utiliser un modèle basé sur des cartographies.

$\kappa$ représente le ratio des chaleurs spécifiques (Cp/Cv).

La résolution du système d'équations se fait de la manière suivante.

Lorsque la température des gaz dans le collecteur d'admission est mesurée, on obtient les informations recherchées à l'aide des équations suivantes :

$$\begin{cases} Q_{gaz} = A_0 \text{ x } \dfrac{\Delta P}{T_{aref}} + B \\[2mm] Q_{egr} = \text{Barré de St - Venant } (P2/P1, T1, \mu * A) \\[2mm] Q_{air} = Q_{gaz} - Q_{egr} \\[2mm] \tau_{egr} = Q_{egr}/Q_{gaz} \end{cases}$$

Si par contre la température des gaz dans le collecteur d'admission n'est pas mesurée, on fait appel à un bilan enthalpique simplifié qui traduit le mélange de l'air avec une température $T_{air-ras}$ et des gaz d'échappement reconduits avec une température estimée d'après la température de gaz à la sortie du moteur et l'efficacité de l'échangeur thermique des gaz d'échappement reconduits, à l'aide des équations suivantes.

$$
\begin{cases}
Qgaz = A_0 \text{ x } \dfrac{\Delta P}{T_{coll}} + B \\[2mm]
Q_{egr} = \text{Barré de St - Venant} \left(\dfrac{P2}{P3}, T3, \mu * A\right) \\[2mm]
T_{egr} = T3 - \pi_{ECH} * (T3 - T_{eau}) \\[2mm]
T_{coll} = \dfrac{Q_{egr}}{Q_{gaz}} \text{ x } T_{egr} + \left(1\dfrac{Q_{egr}}{Q_{gaz}}\right) \text{ x } T_{air-RAS} \quad \text{(bilan enthalpique simplifié)} \\[2mm]
Q_{air} = Q_{gaz} - Q_{egr} \\[2mm]
\tau_{egr} = \dfrac{Q_{egr}}{Q_{gaz}}
\end{cases}
$$

P2 : pression dans le collecteur d'admission

P3 : pression dans le collecteur d'échappement, mesurée ou modélisée

$T_3$ : température dans le collecteur d'échappement, mesurée ou modélisée

$T_{air-RAS}$ : température air sortie RAS mesurée

$\eta_{ECH}$ : efficacité de l'échangeur cartographiée

La solution de ces équations donne le débit d'air frais ainsi que le taux de gaz d'échappement recirculés.

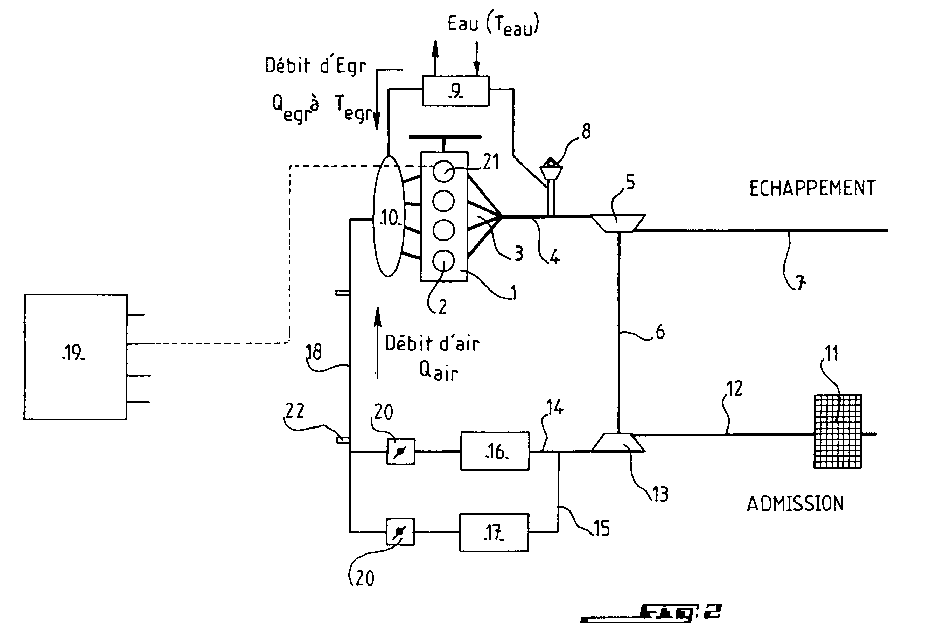

Le procédé de régulation d'un système d'admission d'un moteur à combustion interne, tel qu'il a été décrit ci avant, est avantageusement mis en oeuvre à l'aide d'un dispositif de régulation tel que celui représenté schématiquement sur la figure 2.

Sur la figure 2, un moteur 1 est représenté avec quatre chambres de combustion 2. Les gaz d'échappement sortant de ces quatre chambres de combustion 2 traversent un collecteur de sortie 3 pour être éconduit d'abord par un premier conduit d'échappement 4 jusqu'à la turbine 5 d'un dispositif de suralimentation 6 et ensuite par un second conduit d'échappement 7 symbolisant sommairement un ensemble de tuyaux et de silencieux. Le premier conduit d'échappement 4 est pourvu d'une vanne 8 destinée à dériver un pourcentage variable des gaz d'échappement pour les faire recirculer dans les chambres de combustion 2. Sur ce chemin, les gaz d'échappement recirculés passent par un échangeur thermique 9 permettant de refroidir les gaz d'échappement recirculés avant de les introduire dans un collecteur d'admission 10 à partir duquel ils sont introduits, ensemble avec de l'air frais, dans les chambres de combustion 2.

Par ailleurs, de l'air frais est aspiré à travers d'un filtre à air 11 et amené dans un premier conduit d'admission 12 vers le compresseur 13 du dispositif de suralimentation pour être amené ensuite par un deuxième conduit d'admission 14 et un troisième conduit d'admission 15 à travers respectivement un échangeur air/eau 16 et un échangeur air/air montés en parallèle, vers un quatrième conduit d'admission 18 pour être introduit dans le collecteur d'admission 10.

Les différents éléments du moteur à combustion interne 1 et les différents agrégats qu'il comporte sont pourvus de différents capteurs de température et de pression engendrant des signaux qui sont introduits dans un dispositif de stockage et de calcul de données 19. Ce dispositif de stockage de données et de calculs 19 est conformé pour mettre en oeuvre les différentes étapes du procédé de régulation de l'invention.

Au moins une des chambres de combustion 2 est pourvue d'un capteur de pression 21 dont le signal $P_{cyl}$ est amené dans le dispositif de stockage de données et de calculs 19. Le moteur 1 est équipé d'un capteur de position angulaire du vilebrequin afin de pouvoir corréler les valeurs de pression avec des positions de la chambre de combustion considérée et afin de pouvoir calculer les variations de pression en fonction des variations de volume de chacune des chambres de combustion. Le système pour la mise en oeuvre du procédé de l'invention comprend par ailleurs un capteur de pression 22 destiné à mesurer la pression d'admission dans le collecteur 10. Le signal engendré par le capteur 22 est introduit dans le dispositif de stockage de données et de calcul 19.

Le dispositif de stockage de données et le calcul 19 engendre de sa part, après chaque cycle de calculs, des signaux d'actionnement qui sont envoyés, par exemple, vers la vanne 8 pour varier le taux de gaz d'échappement recirculés entrant dans le collecteur d'admission 10. Un autre signal de régulation peut être envoyé, par exemple, vers des papillons 20 disposés respectivement dans le conduit d'admission 14 et le conduit d'admission 15 pour varier la quantité d'air frais.

**Revendications**

**1.** Procédé de régulation d'un système d'admission d'un moteur à combustion interne, **caractérisé en ce qu'**il comprend au moins les étapes suivantes :

mesurer au moins une valeur de pression dans au moins une chambre de combustion du moteur et calculer la ou les variations de pression par rapport à une pression de référence,

estimer la masse totale de gaz admise dans l'ensemble des chambres de combustion du moteur à partir de la (ou des) variation(s) de pression calculée(s) et sur la base d'une série de valeurs de débit de gaz préalablement prédéterminée en fonction d'une variation de pression dans la chambre de combustion,

mesurer la pression de suralimentation,

estimer la pression et la température des gaz d'échappement recirculés en sortie de moteur,

estimer le débit de gaz d'échappement recirculés à l'aide de la pression de suralimentation mesurée et de l'estimation de la pression et de la température des gaz en sortie de moteur, et

introduire la masse totale de gaz estimée et le débit de gaz d'échappement recirculés ainsi qu'au moins la température de l'ensemble gaz et air frais comme valeurs d'entrée dans un régulateur destiné à réguler le système d'admission.

2. Procédé selon la revendication 1, **caractérisé par** une étape consistant à mesurer la température des gaz admis dans les chambres de combustion du moteur et corriger la masse totale de gaz admise en fonction des variations de la température des gaz admis.

3. Procédé selon la revendication 1, **caractérisé par** une étape consistant à estimer la température des gaz admis dans les chambres de combustion du moteur à partir des paramètres du moteur et d'un modèle d'échanges thermiques, et à corriger la masse totale de gaz admise en fonction des variations de la température des gaz admis.

4. Procédé selon l'une quelconque des revendications 1 à 3, **caractérisé en ce que** la masse totale de gaz admise dans l'ensemble des chambres de combustion du moteur est obtenue à partir des estimations individuelles de la masse totale de gaz admise dans chacune des chambres de combustion du moteur.

5. Procédé selon l'une quelconque des revendications 1 à 3, **caractérisé en ce que** la masse totale de gaz admise dans l'ensemble des chambres de combustion du moteur est obtenue à partir d'une estimation de la masse totale de gaz admise dans une seule chambre de combustion du moteur.

6. Véhicule automobile comprenant un moteur à combustion interne pourvu d'un collecteur de gaz d'admission, les gaz d'admission comprenant au moins de l'air frais, de soupapes d'admission destinées à permettre le passage des gaz d'admission vers des chambres de combustion du moteur ainsi que de pistons destinés à varier la pression des gaz dans les chambres de combustion du moteur,

**caractérisé en ce qu'**il comprend des moyens de mesure de la pression des gaz dans au moins une chambre de combustion du moteur, des moyens de stockage d'une série de valeurs de débit de gaz admis dans une chambre de combustion en fonction d'une somme de variations de pression dans la chambre de combustion, et des moyens de stockage et de calcul reliés aux moyens de mesure de la pression de gaz, les moyens de stockage et de calcul étant conformés pour mettre en oeuvre le procédé de régulation selon l'une quelconque des revendications 1 à 5.

7. Véhicule automobile selon la revendication 6, **caractérisé en ce qu'**il comprend des moyens pour mesurer la position angulaire d'un vilebrequin auquel les pistons sont reliés, et **en ce que** les moyens de stockage et de calcul sont également reliés aux moyens de mesure de la position angulaire du vilebrequin.

8. Véhicule automobile selon la revendication 6 ou 7, **caractérisé en ce que** les moyens de stockage d'une série de valeurs de débit de gaz admis dans une chambre de combustion en fonction d'une variation de pression dans la chambre de combustion comprennent également des moyens de modélisation de valeurs de débit de gaz admis.

Fig.1

Fig. 2

**Office européen**

**des brevets**

**RAPPORT DE RECHERCHE EUROPEENNE**

Numéro de la demande

EP 05 29 2349

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,Y | FR 2 835 281 A (PEUGEOT CITROEN AUTOMOBILES SA) 1 août 2003 (2003-08-01) * figures 1,2 * * page 1, ligne 25 - page 2, ligne 2 * * page 3, ligne 28 - page 5, ligne 33 * * page 8, ligne 3 - page 13, ligne 22 * ----- | 1-8 | F02D41/00 |
| Y | US 6 035 639 A (KOLMANOVSKY ET AL) 14 mars 2000 (2000-03-14) * figure 1 * * colonne 2, ligne 13-59 * * colonne 4, ligne 1 - colonne 5, ligne 10 * * colonne 7, ligne 2-17 * ----- | 1-8 | |

| | DOMAINES TECHNIQUES RECHERCHES (IPC) |
|---|---|
| | F02D |

Le présent rapport a été établi pour toutes les revendications

| Lieu de la recherche | Date d'achèvement de la recherche | Examinateur |
|---|---|---|
| La Haye | 21 février 2006 | Parmentier, H |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 05 29 2349

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-02-2006

| Document brevet cité au rapport de recherche | | Date de publication | Membre(s) de la famille de brevet(s) | | Date de publication |
|---|---|---|---|---|---|
| FR 2835281 | A | 01-08-2003 | AUCUN | | |
| US 6035639 | A | 14-03-2000 | DE | 60002238 D1 | 28-05-2003 |
| | | | DE | 60002238 T2 | 06-11-2003 |
| | | | EP | 1024262 A2 | 02-08-2000 |

Pour tout renseignement concernant cette annexe : voir Journal Officiel de l'Office européen des brevets, No.12/82